# FASCICULE DE BREVET EUROPEEN

(11) **EP 3 518 559 B1**
(45) Date de publication et mention de la délivrance du brevet: **24.03.2021**
(21) Numéro de dépôt: 19153687.9
(22) Date de dépôt: 25.01.2019
(51) Int. Cl.: H04R 25/00, H04B 5/00, H04B 5/06

(54) **PROCÉDÉ ET SYSTÈME DE TRANSMISSION À DES PERSONNES APPAREILLÉES DE MESSAGES DIFFUSÉS DANS UN ESPACE FERMÉ**
VERFAHREN UND SYSTEM ZUR ÜBERTRAGUNG VON NACHRICHTEN, DIE IN EINEM GESCHLOSSENEN RAUM AUSGESTRAHLT WERDEN, AN MIT GERÄTEN AUSGESTATTETE PERSONEN
METHOD AND SYSTEM FOR TRANSMITTING MESSAGES BROADCAST IN A CLOSED SPACE TO PEOPLE WEARING DEVICES

(30) Priorité: 26.01.2018 FR 1850636
(43) Date de publication de la demande: 31.07.2019
(73) Titulaire: BACQUEYRISSES - SOCIETE AUTOMOBILES, 33522 Bruges Cedex (FR)
(72) Inventeur: BACQUEYRISSES, Jean, 33110 LE BOUSCAT (FR); NIEDDU, Giovanni, 33700 MERIGNAC (FR)
(74) Mandataire: Ipside

(56) Documents cités:
- US-A1- 2008 170 713
- US-A1- 2011 059 696
- US-A1- 2012 148 077
- US-A1- 2016 292 669
- US-B1- 6 664 931

## Description

### DOMAINE TECHNIQUE

L'invention se rapporte à un véhicule de transport en commun comportant un système de transmission sonore par boucle d'induction magnétique à des personnes malentendantes et appareillées.
L'invention concerne le domaine de l'aide aux malentendants afin qu'ils puissent capter les informations sonores diffusées dans des cabines de véhicules de transport en commun (autobus, autocar, tram, avion etc.), où le bruit de fond est en général assez élevé.

Cette aide a été d'abord développée dans le domaine des communications téléphoniques. Une boucle d'induction magnétique (en abrégé BIM) est intégrée dans l'appareil d'aide auditive pour capter la variation magnétique du haut-parleur du combiné et générer ainsi un champ magnétique modulé par la source sonore. Puis cette technologie a été généralisée dans des espaces de réception du public (banques, cinémas, ascenseurs, administrations, etc.) où des informations sonores sont transmises pour diriger les personnes vers un lieu de destination. Les malentendants sont ainsi informés avant et pendant leur transport (terrestre, aérien ou maritime), ce qui évite les silences prolongés.

### ÉTAT DE LA TECHNIQUE

Un problème surgit avec la communication sonore opérée avec des dispositifs téléphoniques cellulaires, tels que les téléphones mobiles GSM, qui provoque des interférences avec les appareils d'aide auditive. Afin de supprimer ce type d'inconvénient, le document de brevet EP 0 789 474 propose un dispositif de téléphonie mains-libres, comportant un équipement muni d'une boucle BIM montée sur un boîtier adaptateur, lui-même connecté au téléphone mobile attaché à la ceinture de l'utilisateur. Une oreillette, qui peut être un appareil d'aide auditive, comprend un écouteur et un enroulement d'induction connecté à l'écouteur.

L'écouteur peut ainsi recevoir les signaux sonores provenant de la boucle d'induction portée autour du cou de l'utilisateur par la modulation du champ d'induction créé par la boucle et capté par l'enroulement d'induction. Cette solution est une adaptation de la boucle BIM à la téléphonie mobile.

Afin d'améliorer la réception auditive d'un malentendant lors d'un entretien autour d'une table de bureau, une antenne-cadre est fixée sur la partie supérieure de la table pour générer un champ d'induction magnétique amplifié. La bobine d'induction de l'appareil auditif de l'utilisateur induit alors une tension alternative amplifiée. Cette innovation ne fonctionne que dans le cadre d'une conversation de part et d'autre d'une table équipée de l'antenne-cadre.

Le document de brevet EP 1 933 595 décrit un dispositif acoustique à diffusion directionnelle dans une zone limitée et convenant aux malentendants appareillés. Ce dispositif est constitué d'un caisson dont les parois latérales délimitent une enceinte acoustique interne, dans laquelle l'extrémité d'une membrane flexible est fixée pour former une membrane vibrante de haut-parleur.

La boucle BIM reliée à un amplificateur génère un champ magnétique porteur de signaux sonore reçus par la bobine réceptrice d'un appareil de réception (casque ou prothèse) porté par l'utilisateur. De tels dispositifs, de structure complexe, sont destinés à être fixés dans des espaces particuliers et sont difficiles à mettre en œuvre dans des espaces à structure métallique. De plus, les cloisons du caisson absorbent l'énergie du signal magnétique.

Dans le document de brevet US9126514, une transmission inductive de données et d'énergie est effectuée entre une bobine primaire agencée sur un dossier de siège en liaison avec une antenne de communication inductive à partir d'un bus de données et de puissance électrique, et une bobine secondaire portée au dos d'une tenue en liaison avec une batterie via un chargeur. Cette solution utilise bien des boucles BIM mais ne peut s'appliquer à la diffusion d'informations à des personnes appareillées La demande de brevet US 2008/170713 A1 donne un exemple d'un système de diffusion de messages sonores au moyen d'une BIM périmétrique autour du plancher, du plafond ou d'un mur de l'ascenseur et de sorte à dimensionner un champ magnétique pouvant atteindre au moins deux personnes. L'inconvenant de ce système est sa forte consommation énergétique. La demande de brevet US 2012/148077 A1 donne un exemple de système à boucle d'induction magnétique installé dans une voiture et permettant de réduire la consommation énergétique dudit système. Cette solution vise néanmoins la mise en œuvre d'antennes à utilisation individuelle. Enfin, les documents US 2016/292669 A1, US 2011/059696 A1, US 6 664 931 B1 donnent des exemples des antennes de faible puissance.

### EXPOSÉ DE L'INVENTION

L'invention vise à permettre aux personnes malentendantes et appareillées de recevoir le même niveau d'informations sonores que les personnes ne présentant pas de déficience auditive, dans les véhicules de transport, que ces véhicules soient terrestres, maritimes ou aériens. Il est en effet reconnu que les alarmes et autres avertissements sonores, qui restent les moyens d'information les plus efficaces, sont générateurs d'états anxiogènes augmentés pour les malentendants. En particulier dans les transports (incidents, grèves, changement de données d'information, etc.), la difficulté à percevoir les messages sonores (alarmes, évacuations d'urgence, arrêts, consignes de sécurité, etc.) est accrue dans le bruit des moteurs et des avertisseurs sonores des véhicules. De plus, les palliatifs classiquement mis en place (panneaux visuels, effets optiques, etc.) restent inefficaces car les informations sonores telles que diffusées initialement à l'ensemble des voyageurs sont celles qui sont recherchées en priorité par les malentendants. Sans système de transmission sonore adapté, les personnes malentendantes sont également privées de toute information sonore destinée à une activité ludique et à l'ensemble des passagers de la cabine lors du voyage, par exemple le son d'un film ou de la musique, voire des informations touristiques.

Il est connu de générer des champs d'induction magnétique de la taille d'une salle de cinéma ou d'un comptoir de banque qui sont entourées de matière non conductrice de l'électricité. Mais cette réalisation devient problématique dans le cadre d'un véhicule de transport composé de métaux et qui est équipé de structures métalliques (groupes moteurs, supports, distributeurs, etc.). Cet environnement métallique imposerait l'usage d'un système d'émission de champ extrêmement puissant pour dominer les pollutions électromagnétique et sonore, ainsi que la dégradation de la transmission par absorption et atténuation des fréquences élevées par la production de courants de Foucault induits dans les masses métalliques. Une difficulté supplémentaire est d'obtenir un champ d'induction homogène.

L'intégration d'une boucle d'induction magnétique dans un véhicule de transport pose également des problèmes d'un point de vue économique. D'une part due à la forte consommation énergétique nécessaire pour implémenter les systèmes actuels requérant d'une importante puissance de sortie pour transmettre des messages sonores clairs dans un environnement métallique. D'autre part, en raison de l'utilisation des technologies complexes faisant appel à des filtres et à des dispositifs pilote et d'amplification de boucle spécifiques pour ces applications.

L'intégration de la boucle dans le véhicule suppose idéalement de prévoir l'intégration de ladite boucle dès la conception du véhicule, soit de l'intégrer de manière visible. Dans le dernier cas, elle est exposée à la détérioration volontaire ou involontaire par les passagers.

La présente invention a pour bout de proposer un véhicule de transport en commun intégrant un système de transmission sonore par boucle d'induction magnétique capable de transmettre des signaux sonores clairs dans un environnement métallique, tout en ayant une consommation électrique modérée et ne remettant pas en cause la conception ou les éléments d'aménagement de ladite cabine.

À cet effet, la présente invention a pour objet un véhicule de transport comportant un système de transmission de messages sonores par boucle d'induction magnétique à des personnes malentendantes et appareillées, ledit système comportant un moyen de conversion d'ondes sonores provenant d'un émetteur primaire de messages en courant électrique modulé circulant dans un circuit de diffusion des messages dans un à plusieurs haut-parleurs répartis dans la cabine dudit véhicule, le circuit de diffusion étant connecté à au moins une boucle d'induction magnétique formant des lignes de champ d'induction magnétique porteur de signaux sonores induits par le courant électrique modulé. En particulier, dans ce véhicule
- ledit véhicule est un autobus, un autocar, un tram, un avion, ou un train ;
- la boucle d'induction magnétique est agencée dans un logement d'un élément d'aménagement présent dans la cabine du véhicule ;
- ledit élément d'aménagement est situé en surélévation d'un plancher, et en dessous d'un plafond de ladite cabine, et est choisi parmi : un dossier de siège ou un appui-dos ; et
- la boucle est dimensionnée en fonction d'un pourtour dudit élément d'aménagement, ledit pourtour déterminant une zone de projection du champ d'induction magnétique porteur des signaux sonores s'étendant autour de la tête d'au moins deux passagers ;
- la boucle d'induction magnétique comporte un nombre n optimisé des spires déterminant un compromis entre un champ magnétique suffisamment fort pour dépasser un seuil de bruit ambiant et une limitation suffisante d'une self-induction intrinsèque formée par les spires qui atténue les fréquences aiguës.

L'invention prévoit ainsi de générer un champ d'induction magnétique dimensionné pour être limité dans une zone de la cabine qui reste à proximité de la tête des passagers, la zone de projection du champ magnétique permettant de transmettre des messages sonores à au moins deux personnes. Dans l'invention, un nombre n optimisé des spires permet d'obtenir un champ magnétique suffisamment puissant afin de minimiser le niveau des parasites perçus dans les appareillages, tout en ayant une consommation énergétique modérée pour le système.

L'emploi d'un logement dans un élément d'aménagement de la cabine permet de rapprocher la boucle d'induction magnétique près de la tête de passagers, et d'utiliser par exemple une boucle périmétrique simple suivant le pourtour dudit élément. Une zone de transmission de messages sonores est ainsi créée dans la cabine, cette zone étant limitée mais suffisamment grande pour entourer la tête d'une à plusieurs personnes en conservant un champ magnétique maximal de 0 dB suivant les exigences des normes IEC 60118-4 :2006 et BS 6083. De plus, l'intégration de la boucle de manière non visible est possible sans remettre en cause la conception de la cabine.

Le véhicule de l'invention comporte un système de transmission comportant un amplificateur et/ou des moyens de conversion d'ondes sonores alimentés par des moyens d'alimentation électrique autonomes, ou par le réseau électrique local, reliant ladite boucle au circuit de diffusion.

Dans un mode de réalisation, deux ou plusieurs boucles d'induction magnétique sont agencées, respectivement, dans un logement d'un élément d'aménagement de ladite cabine de sorte à former plusieurs zones de transmission de messages sonores par boucle d'induction magnétique.

De préférence, chacune des boucles d'induction magnétique présentes dans la cabine de véhicule est reliée au circuit de conversion par ses propres moyens de conversion d'ondes sonores et/ou amplificateur.

Le véhicule de l'invention peut comporter également toutes ou partie des caractéristiques suivantes considérées isolément ou en toute combinaison techniquement opérable.
- Le pourtour de l'élément de la cabine suivant lequel est dimensionnée la boucle d'induction magnétique a une longueur L comprise entre 0,8 m et 10 m.
- L'élément d'aménagement pour l'intégration de la boucle magnétique se trouve à une distance maximale de 1,2 m de la zone autour de la tête de passagers destinés à recevoir les messages sonores.
- La résistance de boucle d'induction magnétique est comprise entre 0,5 et 3 Ω.
- le nombre n de spires est choisi entre 2 et 15

L'invention est définie par la revendication indépendante 1. Des modes de réalisation préférés de l'invention sont stipulés dans les revendications dépendantes. Bien que plusieurs modes de réalisation et/ou exemples aient été divulgués dans la description, l'objet pour lequel la protection est demandée est strictement et uniquement limité aux modes de réalisation et/ou exemples compris dans le champ d'application des revendications annexées. Les modes de réalisations et/ou les exemples mentionnés dans la description qui n'entrent pas dans le champ d'application des revendications sont utiles pour comprendre l'invention.

### PRÉSENTATION DES FIGURES

D'autres données, caractéristiques et avantages de la présente invention apparaîtront à la lecture de la description non limitée qui suit, en référence aux figures annexées qui représentent, respectivement :
- la figure 1, un schéma de base de la diffusion de messages avec un exemple de système de transmission aux personnes appareillées selon l'invention ;
- la figure 2, la vue arrière d'un siège de véhicule de transport équipé d'un système de transmission selon l'invention ;
- la figure 3, la vue arrière d'une rangée de deux sièges d'un autobus équipée d'un exemple de système de transmission sonore selon l'invention en cours d'installation ;
- la figure 4 un autobus équipé de sièges avec une boucle d'induction magnétique dans un dossier
- la figure 5, un mode de réalisation d'autobus comportant un appui-dos intégrant une boucle d'induction magnétique (non visible) selon l'invention
- la figure 6, un exemple d'autobus comportant un panneau voussoir intégrant une boucle d'induction magnétique (non visible) selon un mode de réalisation non couvert par la présente invention.
- la figure 7, un exemple d'autocar comportant un porte bagages côté gauche et porte bagages côté droit, intégrant chacun une boucle d'induction magnétique (non visible) selon un mode de réalisation non couvert par la présente invention.
- la figure 8, un exemple d'autocar comportant un coffret de pavillon technique intégrant une boucle d'induction magnétique (non visible) selon un mode de réalisation non couvert par la présente invention.

### DESCRIPTION DETAILLÉE

Sur les figures, des signes de référence identiques renvoient à un même élément ou un élément équivalent, ainsi qu'aux paragraphes qui le décrivent. L'invention propose un véhicule de transport comportant un système de transmission de messages sonores par boucle d'induction magnétique à des personnes malentendantes et appareillées, ledit système comportant un moyen de conversion d'ondes sonores provenant d'un émetteur primaire de messages en courant électrique modulé circulant dans un circuit de diffusion des messages dans un à plusieurs haut-parleurs répartis dans une cabine dudit véhicule, le circuit de diffusion étant connecté à au moins une boucle d'induction magnétique formant des lignes de champ d'induction magnétique porteur de signaux sonores induits par le courant électrique modulé. En particulier, dans ce véhicule :
- la boucle d'induction magnétique est agencée dans un logement d'un élément d'aménagement présent dans la cabine du véhicule, et
- la boucle est dimensionnée pour suivre essentiellement un pourtour dudit élément d'aménagement, ledit pourtour déterminant une zone de projection du champ magnétique porteur des signaux sonores dans un espace limité s'étendant autour de la tête d'au moins deux passagers ;
- la boucle d'induction magnétique comporte un nombre n optimisé de spires déterminant un compromis entre un champ magnétique suffisamment fort pour dépasser un seuil de bruit ambiant et une limitation suffisante d'une self-induction intrinsèque formée par les spires qui atténue les fréquences aiguës.

Par élément d'aménagement de la cabine, on entend tout élément ou sous élément présent dans la cabine permettant de remplir une fonction structurelle, fonctionnelle ou esthétique autre que l'intégration de la boucle d'induction magnétique. Par exemple un siège, un assis ou un dossier de siège, un appuis-dos de siège, un panneau structurel ou d'habillage tel qu'un voussoir ou un panneau de coffret technique de pavillon, un porte-bagages, un cadre de porte etc.

Par cabine, on entend l'habitacle d'un véhicule de transport en commun occupé par les personnes se déplaçant dans ledit véhicule. Bien entendu, les éléments d'aménagement présentes dans une cabine varient en fonction du type véhicule de transport.

L'élément d'aménagement de la cabine pour l'intégration de la boucle d'induction magnétique sera donc choisi en fonction de sa proximité à la tête de passagers. L'élément d'aménagement est situé en surélévation du plancher et en-dessous du plancher, de manière à rapprocher le plus possible la boucle à la tête de passagers. Par exemple pour un autocar, le porte-bagages de la cabine et le panneau de coffret technique de pavillon seront privilégiés pour l'intégration de la boucle. Avantageusement, une longueur L du pourtour de l'élément d'aménagement de la cabine suivant lequel est dimensionné la boucle d'induction magnétique est compris entre 0,8 m et 10 m, et de préférence entre 0,8 et 6 m.

Pour un autobus, un moyen de transport routier assurant le transport sur courtes distances en milieu urbain ou suburbain, les éléments d'aménagement privilégiés seront les dossiers de siège pour délivrer des messages sonores aux passagers assis, et les appui-dos ou des panneaux dits voussoir pour les passagers voyageant debout.

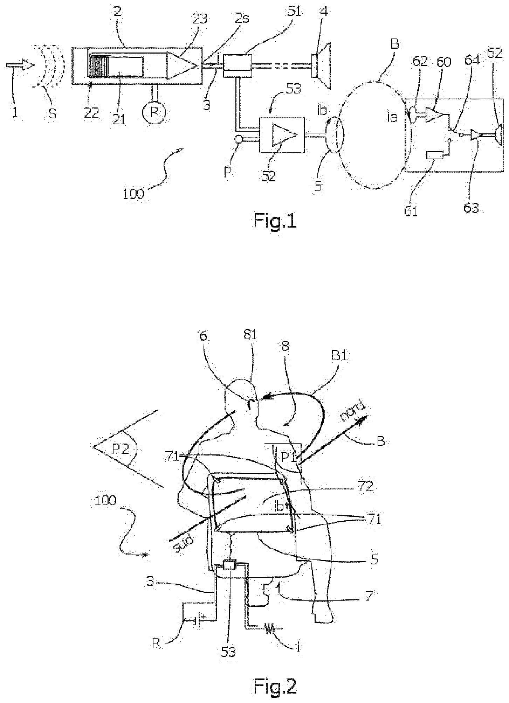

Le schéma de base de la figure 1 illustre un exemple de système de transmission 100 aux personnes appareillées de messages diffusés selon l'invention. Dans ce schéma, il apparaît que les messages sous forme d'ondes sonores « S », d'abord émis par une source sonore primaire 1, sont dirigés sur un convertisseur électrique de ligne 2 du système de transmission 100. Ce convertisseur de ligne 2, de type microphone, comporte classiquement un aimant 21 entouré d'une bobine mobile à membrane vibrante 22 reliée à un amplificateur 23 alimenté électriquement par un réseau électrique local « R ».

Un circuit électrique 3, dans lequel circule un courant modulé « i », relie la sortie 2s du convertisseur 2 à un haut-parleur 4. Une boucle d'induction magnétique 5 est reliée au circuit électrique 3 par un boîtier de dérivation 51 via un amplificateur de boucle 52. Le boîtier 51 est avantageusement dé-connectable pour définir un mode autonome. Le boitier 51 est alors déconnecté et un convertisseur dit de boucle 53, de type microphone intégrant l'amplificateur de boucle 52, est activé. Cette activation résulte de ce débranchement ou, alternativement, par tout moyen de commutation. Les ondes sonores émises par le haut-parleur 4 sont alors converties en courant modulé « i_{b} » dans la boucle 5. Le convertisseur de boucle 53 est alimenté par une pile « P ».

Un appareil d'assistance auditive bi-fonctionnelle 6, capable de se coupler également à une boucle d'induction magnétique telle que la boucle 5, est présent sur le marché. Un tel appareil 6 possède, outre son microphone 61 couplé à un haut-parleur intra-auriculaire 62 via un amplificateur adapté 63, une mini-boucle d'induction magnétique 62 couplée à un amplificateur 60. Cette mini-boucle 62 est apte à intercepter le champ magnétique émis par la boucle d'induction magnétique 5 du système de transmission 100. Un sélecteur 64 permet de passer du mode de réception conventionnel, position « M » pour microphone, au mode de réception inductif, position « T » pour « télé-bobine » (« Telecoil » en terminologie anglaise).

En fonctionnement, le courant « i_{b} » circulant dans la boucle d'induction magnétique 5 du système de transmission 100 est modulé par les ondes sonores des messages provenant de la source primaire 1 - émis par un annonceur, une bande sonore, une alerte ou équivalent -, ou par les ondes sonores des messages provenant du haut-parleur 4 (en mode autonome). Les modulations du courant de boucle « i_{b} » créent un champ magnétique d'intensité variable « B » qui induit un courant « iₐ » reproduisant les modulations du courant « i_{b} » dans la mini-boucle 62 de l'appareil auditif 6. Ce courant induit « iₐ » est transmis au haut-parleur intra-auriculaire 62 qui reproduit les messages sonores provenant d'une source primaire 1 ou du haut-parleur 4 du système de transmission 100 (lorsque la boucle d'induction magnétique 5 est en mode autonome).

La vue arrière de la figure 2 illustre schématiquement un exemple de système de transmission 100 selon l'invention lorsque la boucle d'induction magnétique 5 est logée dans un siège 7 d'une cabine de véhicule de transport. Dans ce mode de réalisation, la boucle d'induction magnétique 5 est constituée d'un solénoïde à 8 spires monté par des attaches libérables 71 dans le dossier 72 du siège 7.

La boucle 5 est alors reliée au circuit électrique 3 par le convertisseur de boucle 53. Le réseau électrique local « R » assure l'alimentation du circuit électrique 3 dans lequel circule le courant modulé « i » correspondant aux ondes sonores émises par la source primaire 1 (cf. figure 1). Le courant modulé « i_{b} » circulant dans la boucle d'induction magnétique 5 produit un champ magnétique d'intensité variable « B » (centré selon l'axe Sud - Nord comme indiqué sur la figure).

Le plan P1, dans lequel s'étendent les lignes B1 du champ magnétique « B » qui entourent la tête 81 de la personne appareillée 8 assise sur le siège 7, est sensiblement perpendiculaire au plan P2 dans lequel s'étend la boucle d'induction magnétique 5, et donc sensiblement perpendiculaire au dossier 72 du siège 7. Dans ces conditions, ces lignes de champ B1 qui entourent la personne 8 porteuse de l'appareil d'assistance auditive 6 pénètrent l'appareil d'assistance auditive 6 et sont converties en signal sonore amplifié par cet appareil 6 lorsque la personne appareillée 8 a positionné le sélecteur 64 en position « T » (cf. figure 1).

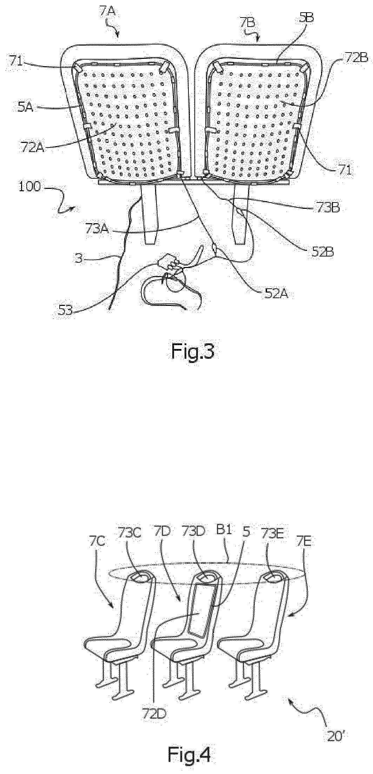

La vue arrière de la figure 3 montre un exemple schématique de l'installation du système de transmission sonore de l'invention destinée à une rangée de deux sièges 7A, 7B d'un autobus 20. Les boucles d'induction magnétique 5A et 5B sont maintenues en bordure des dossiers 72A, 72B sensiblement rectangulaires des sièges 7A, 7B par des attaches 71 fixes dans cet exemple de réalisation. Les dossiers 72A, 72B seront ensuite recouverts d'un habillage qui dissimulera les boucles 7A, 7B. En variante, les boucles d'induction magnétiques 7A, 7B sont logées après leur recouvrement par l'habillage final et par des moyens d'attache libérables (clips, lamelle à ressort, etc.).

Les boucles 5 d'induction magnétiques 7A, 7B sont reliées au circuit électrique 3 porteur du signal sonore amplifié sous forme de courant modulé (cf. également la figure 1), via des câbles électriques 73A, 73B connectés au convertisseur de boucle 53 lui-même relié au circuit 3 (cf. également la figure 1). Des connecteurs 52A, 52B relient les câbles 73A, 73B à l'amplificateur de boucle intégré au convertisseur de boucle 53.

Dans un mode de réalisation préféré, le logement de la boucle 5 d'induction magnétique BIM est à l'intérieur de l'élément d'aménagement. Par exemple, dans le cas du dossier de siège, la boucle 5 est introduite dans le dossier au moyen d'une face démontable avant ou arrière dudit siège. Ce mode de réalisation permet de protéger la BIM d'une détérioration par les passagers, ainsi que de diminuer l'influence de l'environnement métallique grâce à l'entourage de la boucle d'induction magnétique 5 par des matériaux majoritairement plastiques.

La figure 4 montre un exemple d'installation du système de transmission 100, mis en place dans un véhicule de transport, par exemple dans un autobus 20' équipé de sièges avec appui-têtes, comme illustré par la figure 4. Dans l'exemple, un seul siège 7D est équipé d'une boucle d'induction magnétique 5 agencée dans le dossier 72D de ce siège. Le siège 7D est disposé de manière médiane entre les sièges 7C et 7E d'une même ligne de sièges. La boucle d'induction magnétique 5 possède huit spires et est dimensionnée pour suivre le pourtour du dossier 72D.

Ce nombre n de spires représente un compromis entre un champ magnétique suffisamment fort pour dépasser un seuil de bruit ambiant dans l'autobus et une limitation suffisante d'une self-induction intrinsèque qui est créée par les spires et qui a pour effet d'atténuer l'intensité des fréquences aiguës. En outre, la dimension de cette boucle 5 permet d'induire un champ d'induction magnétique de dimension suffisante pour que des lignes de champ B1 entourent les trois sièges 7C à 7E au niveau des appui-têtes 73C à 73E. Trois personnes appareillées assises dans les sièges 7C à 7E peuvent ainsi bénéficier de l'assistance sonore d'une même boucle d'induction magnétique 5, tout en gardant un champ magnétique suffisamment bas autour de la tête du passager occupant le siège 7 D pour ne dépasser un niveau de 0 dB ou saturer son aide auditive.

La boucle 5 d'induction magnétique est dimensionnée en fonction du pourtour de l'élément d'aménagement de la cabine intégrant ladite boucle. Comme dans les exemples illustrés, cette boucle 5 peut être une boucle périmétrique simple, c'est-à-dire que la boucle suit essentiellement le contour de l'élément d'aménagement. Dans d'autres modes de réalisation, la boucle pourra être réalisée dans d'autres formes, mais toujours conditionnée par les dimensions du pourtour de l'élément d'aménagement de la cabine. Par exemple, en suivant partiellement le pourtour d'un panneau la boucle peut avoir une forme de « L » ou de « 8 ».

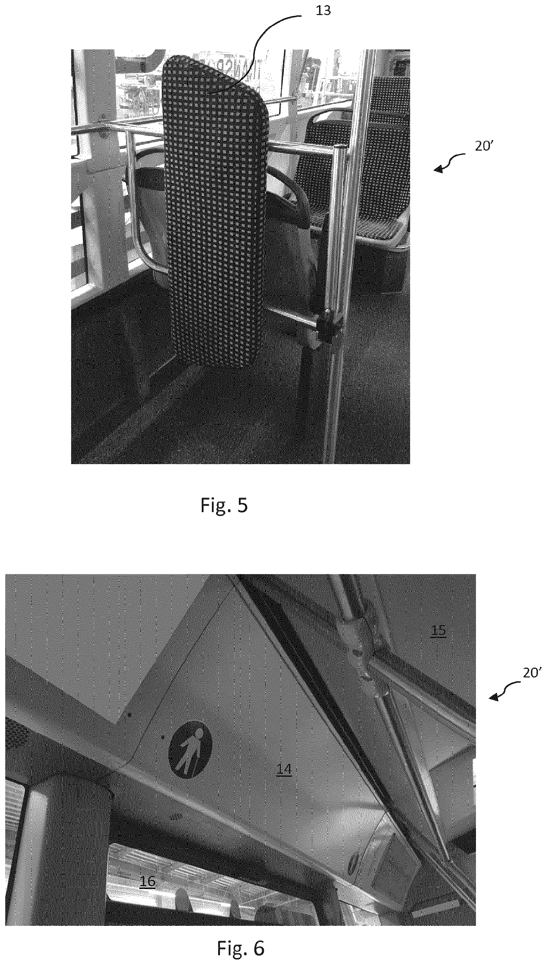

Les figures 5 et 6 montrent des modes de réalisation dans lesquels l'élément d'aménagement de la cabine pour l'intégration de la boucle est un appui-dos 13 (figuere 5 couverte par la présente invention) et un panneau voussoir 14 (figure 6 non couverte par la présente invention) Ces modes réalisation permettent de créer une zone de projection de messages sonores jusqu'à une distance d'environ 0,5-1,2 m autour desdits éléments d'aménagement. Le champ d'induction magnétique projeté par la boucle 5 d'induction magnétique dans l'appui-dos bénéficie autant aux passagers débout à proximité dudit appui-dos, qu'aux passagers assis derrière ledit appui-dos. Le champ magnétique émis par la boucle d'induction magnétique intégré au voussoir 14, l'angle supérieur du pavillon d'un autobus, atteint principalement les passagers voyageant débout en raison de son emplacement aux angles entre les parois 16 verticales et le plafond 15.

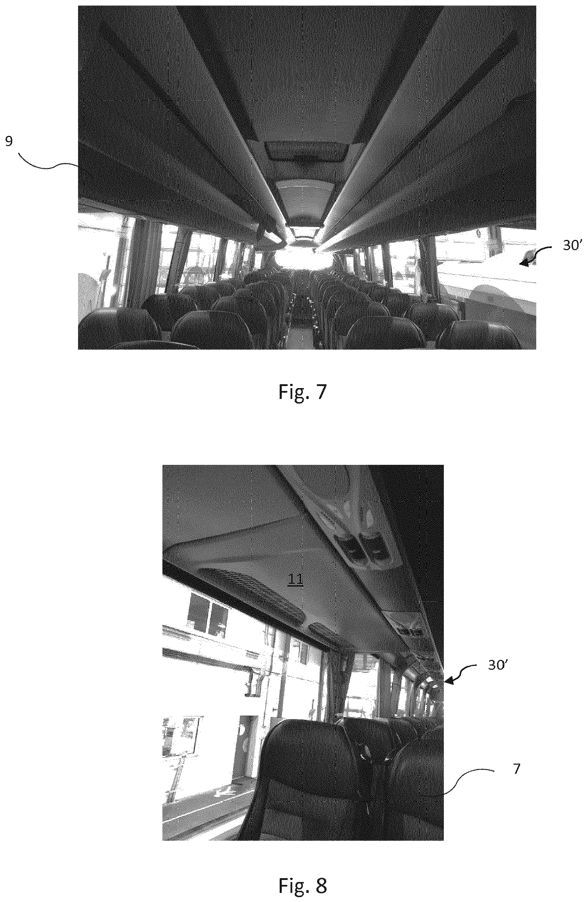

L'invention permet également d'intégrer un système de transmission sonore à boucle magnétique dans un autocar. Les figures 7 et 8 illustrent des modes de réalisation, non couverts par la présente invention, pour intégrer la boucle magnétique à une distance d'environ 30-60 cm de la zone occupée par la tête de passagers qui seront assis aux sièges 7 de l'autocar 30. En particulier, l'intégration dans un pourtour du porte-bagages 9, 9' permet de bénéficier jusqu'à quatre rangées de sièges, chaque rangée accommodant deux personnes, le système pouvant ainsi transmettre des messages sonores à huit personnes appareillées avec un même champ magnétique relativement simple à gérer et à alimenter en courant.

Avantageusement, la boucle 5 d'induction magnétique peut être intégrée dans le coffret de pavillon technique 11, en suivant par exemple un pourtour du panneau inférieur. Cet élément d'aménagement de la cabine permet un accès et installation facile de la boucle car il héberge également des composants du système de climatisation ayant besoin de maintenance.

Bien entendu, la sélection de l'élément d'aménagement de la cabine sera également fonction de la quantité des métaux aux alentours dudit élément d'aménagement, ainsi que d'autres éléments pouvant perturber la transmission d'information sonore.

Avantageusement, l'intégration de la boucle d'induction magnétique dans un véhicule selon l'invention permet de simplifier les besoins en équipement du système de transmission. Par exemple, l'amplificateur de boucle du système possède un besoin d'environ 4 W de puissance en sortie, et une tension d'alimentation de +4.5 à 26 V, qui peuvent être fournis par un amplificateur basse fréquence de boucle magnétique pour des application basiques, tel que pour un comptoir ou pour des dispositifs à boucle portables. De plus, le nombre de spires dans la boucle est également adapté pour fournir une résistance entre 0.5 et 3 Ω, et de préférence d'environ 1 Ω assurant ainsi l'adaptabilité de la boucle 5 à ce type des amplificateurs.

La boucle est par exemple réalisée avec un fil de cuivre multibrins souple et ignifugé. La résistance de la boucle est adaptée suivant la longueur et la section du câble, compte tenu de la résistivité du cuivre.

En outre, la conversion des ondes sonores en courant électrique peut être mise en œuvre par tout moyen connu et adapté (microphone, haut-parleur inversé, système piézoélectrique, etc.). La boucle BIM peut être intégrée à la ceinture de sécurité présente dans les véhicules de transport (véhicules automobiles, autocars, avions, et.). Cette boucle BIM devient opérationnelle lorsque la ceinture est fermée autour du passager.

Par ailleurs, la dispersion des sièges équipés de boucles d'induction magnétique peut être optimisée en fonction du nombre de sièges et de statistiques sur le nombre de personnes malentendantes estimé par type de moyen de transport et/ou tout autre critère (durée moyenne d'attente, etc.).

Le système de transmission de messages selon l'invention n'est pas limité à des autocars et des autobus mais peut s'étendre à tout véhicule de transport intégrant des masses métalliques (train, tram, avion, etc.).

## Revendications

1. Véhicule de transport en commun de personnes comportant un système (100) de transmission de messages sonores par boucle d'induction magnétique à des personnes (8) porteuses d'un appareil d'assistance audio, ledit système (100) comportant un moyen de conversion d'ondes sonores (2) provenant d'un émetteur primaire de messages (1) en courant électrique modulé (i) circulant dans un circuit de diffusion (3) des messages dans un à plusieurs haut-parleurs (4) répartis dans la cabine dudit véhicule, le circuit de diffusion (3) étant connecté à au moins une boucle (5) d'induction magnétique formant des lignes (B1) de champ d'induction magnétique (B) porteur de signaux sonores induits par le courant électrique modulé (i), **caractérisé en ce que** :
- ledit véhicule est un autobus, un autocar, un tram, un avion, ou un train ;
- la boucle (5) d'induction magnétique est agencée dans un logement d'un élément d'aménagement présent dans la cabine du véhicule ;
- ledit élément d'aménagement est situé en surélévation d'un plancher, et en dessous d'un plafond de ladite cabine, et est choisi parmi : un dossier de siège (72, 72 A) ou un appui-dos (13) ; et
- la boucle (5) est dimensionnée pour suivre essentiellement un pourtour dudit élément d'aménagement, ledit pourtour déterminant une zone de projection du champ magnétique (B) porteur des signaux sonores s'étendant autour de la tête d'au moins deux passagers ;
- la boucle (5; 5') d'induction magnétique comporte un nombre n optimisé des spires, ce nombre étant déterminé par un compromis entre un champ magnétique (B) suffisamment fort pour dépasser un seuil de bruit ambiant et une limitation suffisante d'une self-induction intrinsèque formée par les spires qui atténue les fréquences aiguës.

2. Véhicule selon l'une des revendications précédentes, dans lequel le système de transmission (100) comporte un amplificateur (52) et/ou des moyens de conversion (53) d'ondes sonores alimentés par des moyens d'alimentation électrique autonomes (P), ou par le réseau électrique local, reliant ladite boucle (5) au circuit de diffusion.

3. Véhicule selon l'une des revendications précédentes, dans lequel deux ou plusieurs boucles (5) d'induction magnétique sont agencées, respectivement, dans un logement d'un élément d'aménagement de ladite cabine de sorte à former plusieurs zones de transmission de messages sonores par boucle d'induction magnétique.

4. Véhicule selon la revendication 3, dans lequel chacune des boucles (5) d'induction magnétique présentes dans la cabine du véhicule est reliée au circuit de conversion par ses propres moyens de conversion (53) d'ondes sonores et/ou amplificateur de boucle (52).

5. Véhicule selon l'une des revendications précédentes, dans lequel une longueur L du pourtour de l'élément d'aménagement de la cabine suivant lequel est dimensionné la boucle (5) d'induction magnétique est compris entre 0,8 m et 10 m.

6. Véhicule selon l'une des revendications précédentes, dans lequel l'élément d'aménagement pour l'intégration de la boucle magnétique se trouve à une distance maximale de 120 cm de la zone autour de la tête de passagers destinés à recevoir les messages sonores.

7. Véhicule selon l'une des revendications précédentes, dans lequel la résistance de boucle d'induction magnétique est compris entre 0,5 et 3 Ω.

8. Véhicule selon l'une des revendications précédentes, dans lequel le nombre n de spires est choisi entre 2 et 15.

## Patentansprüche

1. Fahrzeug für den öffentlichen Personenverkehr, ein System (100) zur Übertragung von akustischen Nachrichten an Personen (8), die Träger eines Hörhilfegerätes sind, über Magnetinduktionsschleife umfassend, wobei das System (100) ein Mittel zum Umwandeln von Schallwellen (2) beinhaltet, die von einem Primärnachrichtensender (1) stammen, in einen modulierten elektrischen Strom (i), der in einer Verbreitungsschaltung (3) der Nachrichten in einem bis mehreren Lautsprechern (4) zirkuliert, die in der Kabine des Fahrzeugs verteilt sind, wobei die Verbreitungsschaltung (3) mit mindestens einer Magnetinduktionsschleife (5) verbunden ist, die Leitungen (B1) eines Magnetinduktionsfeldes (B), Träger von Schallsignalen, bildet, die durch den modulierten elektrischen Strom (i) induziert werden, **dadurch gekennzeichnet, dass**:
- das Fahrzeug ein Autobus, ein Reisebus, eine Straßenbahn, ein Flugzeug oder ein Zug ist;
- die Magnetinduktionsschleife (5) in einer Aufnahme eines Einrichtungselements, das in der Kabine des Fahrzeugs vorhanden ist, angeordnet ist;
- das Einrichtungselement von einem Fußboden erhöht, und unterhalb einer Decke der Kabine gelegen ist, und ausgewählt ist aus: einer Sitzrückenlehne (72, 72A) oder einer Rückenstütze (13); und
- die Schleife (5) bemessen ist, um im Wesentlichen einem Umfang des Einrichtungselements zu folgen, wobei der Umfang eine Projektionszone des Magnetfeldes (B), Träger der Schallsignale, bestimmt, welches sich um den Kopf mindestens zweier Insassen erstreckt;
- die Magnetinduktionsschleife (5; 5') eine optimierte Anzahl n an Windungen beinhaltet, wobei diese Anzahl durch einen Kompromiss zwischen einem ausreichend starken Magnetfeld (B) zum Übertreffen eines Schwellenwerts eines Umgebungsgeräusches und einer ausreichenden Begrenzung einer durch die Windungen gebildeten intrinsischen Selbstinduktion, die die hohen Frequenzen abschwächt, bestimmt wird.

2. Fahrzeug nach einem der vorstehenden Ansprüche, wobei das Übertragungssystem (100) einen Verstärker (52) und/ oder Mittel zum Umwandeln (53) von Schallwellen beinhaltet, die durch autonome Stromversorgungsmittel (P) oder durch das lokale Stromnetz versorgt werden, wodurch die Schleife (5) an die Verbreitungsschaltung angeschlossen wird.

3. Fahrzeug nach einem der vorstehenden Ansprüche, wobei zwei oder mehr Magnetinduktionsschleifen (5) jeweils in einer Aufnahme eines Einrichtungselements der Kabine angeordnet sind, um mehrere Übertragungszonen von akustischen Nachrichten durch Magnetinduktionsschleife zu bilden.

4. Fahrzeug nach Anspruch 3, wobei jede der in der Kabine des Fahrzeugs vorhandenen Magnetinduktionsschleifen (5) durch ihre eigenen Mittel zum Umwandeln (53) von Schallwellen und/ oder Schleifenverstärker (52) an die Umwandlungsschaltung angeschlossen ist.

5. Fahrzeug nach einem der vorstehenden Ansprüche, wobei eine Länge L des Umfangs des Einrichtungselements der Kabine, gemäß welchem die Magnetinduktionsschleife (5) bemessen ist, zwischen 0,8 m und 10 m enthalten ist.

6. Fahrzeug nach einem der vorstehenden Ansprüche, wobei sich das Einrichtungselement zur Integration der Magnetschleife in einem maximalen Abstand von 120 cm von der Zone um den Kopf von Insassen befindet, die dazu bestimmt sind, die akustischen Nachrichten zu empfangen.

7. Fahrzeug nach einem der vorstehenden Ansprüche, wobei der Widerstand der Magnetinduktionsschleife zwischen 0,5 und 3 Ω enthalten ist.

8. Fahrzeug nach einem der vorstehenden Ansprüche, wobei die Anzahl n an Windungen zwischen 2 und 15 ausgewählt wird.

## Claims

1. A public transport vehicle for people including a system (100) for transmitting sound messages by magnetic induction loop to people (8) carrying an audio assistance apparatus, said system (100) including a means for converting sound waves (2) coming from a primary message emitter (1) into modulated electric current (i) circulating in a circuit (3) for diffusing messages in one to several loudspeakers (4) distributed in the cabin of said vehicle, the diffusion circuit (3) being connected to at least one magnetic induction loop (5) forming lines (B1) of magnetic induction field (B) carrying sound signals induced by the modulated electric current (i), **characterised in that**:
- said vehicle is a bus, a coach, a tram, an aircraft, or a train;
- the magnetic induction loop (5) is arranged in a housing of an arrangement element present in the cabin of the vehicle;
- said arrangement element is located raised relative to a floor, and below a ceiling of said cabin, and is selected from: a seat back (72, 72 A) or a backrest (13); and
- the loop (5) is dimensioned to essentially follow a periphery of said arrangement element, said periphery determining a projection area of the magnetic field (B) carrying sound signals extending around the heads of at least two passengers;
- the magnetic induction loop (5; 5') includes an optimised number n of turns, this number being determined by a compromise between a magnetic field (B) which is strong enough to exceed an ambient noise threshold and a sufficient limitation of an intrinsic self-induction formed by the turns which attenuates the high frequencies.

2. The vehicle according to one of the preceding claims, wherein the transmission system (100) includes an amplifier (52) and/or means (53) for converting sound waves power supplied by autonomous power supply means (P), or by the local electrical network, connecting said loop (5) to the diffusion circuit.

3. The vehicle according to one of the preceding claims, wherein two or more magnetic induction loops (5) are arranged, respectively, in a housing of an arrangement element of said cabin so as to form several areas for transmitting sound messages by magnetic induction loop.

4. The vehicle according to claim 3, wherein each of the magnetic induction loops (5) present in the cabin of the vehicle is connected to the conversion circuit by its own sound wave conversion means (53) and/or loop amplifier (52) .

5. The vehicle according to one of the preceding claims, wherein a length L of the periphery of the arrangement element of the cabin according to which the magnetic induction loop (5) is dimensioned is comprised between 0.8 m and 10 m.

6. The vehicle according to one of the preceding claims, wherein the arrangement element for the integration of the magnetic loop is located at a maximum distance of 120 cm from the area around the head of the passenger intended to receive the sound messages.

7. The vehicle according to one of the preceding claims, wherein the magnetic induction loop resistance is comprised between 0.5 and 3 Ω.

8. The vehicle according to one of the preceding claims, wherein the number n of turns is selected between 2 and 15.
